# EUROPÄISCHE PATENTSCHRIFT

(11) **EP 3 984 719 B1**
(45) Veröffentlichungstag und Bekanntmachung des Hinweises auf die Patenterteilung: **20.08.2025**
(21) Anmeldenummer: 21196052.1
(22) Anmeldetag: 10.09.2021
(51) Int. Cl.: B29C 45/27, B29C 45/00, B29L 31/08

(54) **VERFAHREN ZUM HERSTELLEN EINES GEBLÄSERADS**
METHOD FOR PRODUCING A BLOWER WHEEL
PROCÉDÉ DE FABRICATION D'UNE ROUE DE VENTILATEUR

(30) Priorität: 15.10.2020 DE 102020127199
(43) Veröffentlichungstag der Anmeldung: 20.04.2022
(73) Patentinhaber: ebm-papst Mulfingen GmbH & Co. KG, 74673 Mulfingen (DE)
(72) Erfinder: GRUBER, Erhard, 74589 Satteldorf (DE); KLEINSCHRODT, Martin, 97993 Creglingen (DE); ZHAO, Lili, 97980 Bad Mergentheim (DE)
(74) Vertreter: Staeger & Sperling Partnerschaftsgesellschaft mbB

(56) Entgegenhaltungen:
- DE-A1- 102016 207 545
- DE-A1- 102017 215 570
- JP-A- 2003 094 494
- US-A1- 2006 290 030
- US-A1- 2007 104 581

## Beschreibung

Die Erfindung betrifft ein Verfahren zum Herstellen eines Gebläserads.

Aus dem Stand der Technik sind Gebläseräder aus Kunststoff bekannt, die im Spritzgussverfahren hergestellt werden. Derartige Kunststoffspritzgussbauteile bedürfen einer hohen Qualität, um die nötige Festigkeit für hohe Drehzahlen und die dabei entstehenden Fliehkräfte zu gewährleisten. Die Gebläseräder weisen kritische Bereiche auf, die bei Belastung zu Rissbildung neigen. Ein derartig kritischer Bereich liegt vor allem bei der die Laufradschaufel überdeckenden Deckscheibe vor.

Druckschriftlicher Stand der Technik aus dem vorliegenden technischen Gebiet ist bekannt aus den Dokumenten US 2006/290030 A1, DE 10 2016 207 545 A1, JP 2003 094494 A, US 2007/104581 A1 und DE 10 2017 215 570 A1.

Da bei der Herstellung im Spritzgussverfahren Bindenähte der Kunststofffließfronten entstehen ist insbesondere im Bereich der Bindenähte das Rissbildungsrisiko hoch. Deshalb wird grundsätzlich darauf geachtet, die Bindenähte in einen möglichst spannungsarmen Bereich zu legen. Über die genormte und einzuhaltende Anbindungsauslegung des Spritzgussverfahrens und die Anzahl der benötigten Anbindungen ergibt sich eine entsprechende Anzahl an Bindenähten bei der Deckscheibe. Die Möglichkeit, diese Bindenähte in spannungsarme Bereiche zu legen ist mithin stark eingeschränkt.

Der Erfindung liegt deshalb die Aufgabe zugrunde, ein Verfahren zur Herstellung eines Gebläserads im Kunststoffspritzgussverfahren bereit zu stellen, bei dem die Rissbildungsneigung im Bereich der Bindungsnähte reduziert ist.

Diese Aufgabe wird durch die Merkmalskombination gemäß Patentanspruch 1 gelöst.

Erfindungsgemäß wird ein Verfahren zur Herstellung eines Gebläserads mit einer Anzahl an Laufradschaufeln und einer die Laufradschaufeln überdeckenden Deckscheibe vorgeschlagen, bei dem das Gebläserad in einem Spritzgusswerkzeug im Kaskaden-Spritzgussverfahren aus Kunststoff gespritzt wird. Das Spritzgusswerkzeug umfasst hierzu eine Anzahl an Verschlussdüsen, insbesondere Nadelverschlussdüsen, zur Zuführung des Kunststoffs an verschiedenen Anbindungspositionen, die zur Durchführung des Kaskaden-Spritzgussverfahrens unterschiedliche Öffnungszeiten aufweisen. Die Anzahl der Verschlussdüsen wird erfindungsgemäß in Abhängigkeit von der Anzahl der Laufradschaufeln festgelegt.

Das Kaskaden-Spritzgussverfahren ist dem Fachmann bekannt. Es handelt sich um eine Form des sequenziellen Spritzgießens, bei dem mehrere Verschlussdüsen zum Einsatz kommen, die es ermöglich, das Kunststoff-Formteil über mehrere Anschnitte zu füllen. Auch bekannt ist, für das Kaskaden-Spritzgussverfahren ein Heißkanalsystem zu verwenden, um die Kunststoffformmasse flüssig zu erhalten.

Grundsätzlich ist das Kaskaden-Spritzgussverfahren dadurch gekennzeichnet, dass die Füllung der Kavität im Spritzgusswerkzeug besonders vorteilhaft eingestellt wird, da über eine Steuerung die Öffnungszeiten der Verschlussdüsen individuell einstellbar sind. Die Injektion des Kunststoffs in die Kavität des Spritzgusswerkzeugs findet zunächst über nur bestimmte Verschlussdüsen statt. Die sich ergebende Schmelzfront fließt und erreicht die nachgeschaltete(n) Verschlussdüse(n), die erst dann geöffnet wird bzw. werden. Die Verschlussdüsen werden also nacheinander kaskadenartig geöffnet. Die Kunststoffschmelze fließt nun über die nacheinander geöffneten Verschlussdüsen in die Kavität. Durch die Kaskadentechnik werden zum einen die Anzahl der Bindenähte reduziert, zum anderen können die Bindenähte durch die später geöffneten Verschlussdüsen durchströmt und dabei sogar vollständig eliminiert oder zumindest qualitativ deutlich verbessert werden.

Die erfindungsgemäße Anwendung des Kaskaden-Spritzgussverfahrens zur Herstellung des Gebläserads erfolgt zur Reduzierung oder Beseitigung der Bindenähte in bezüglich der Festigkeit kritischen Bereichen an der Deckscheibe. Dabei wird die Anzahl der Verschlussdüsen in Abhängigkeit von der Anzahl der an der Deckscheibe angebundenen Laufradschaufeln festgelegt, so dass die Schmelzfront des über die Verschlussdüsen eingespritzten Kunststoffs die Verbindungsstellen zwischen der Deckscheibe und den Laufradschaufeln überfließen und über die unterschiedlichen Öffnungszeiten der Verschlussdüsen beim Kaskaden-Spritzgussverfahren keine Bindenähte an der Deckscheibe entstehen. Hierdurch wird die Festigkeit erhöht und die schwachstellenbasierte Rissbildungsneigung reduziert.

Vorteilhaft ist einer Ausführung des Verfahrens, bei dem die verschiedenen Anbindungspositionen der Deckscheibe zugeordnet sind. Insbesondere ist günstig, wenn die verschiedenen Anbindungspositionen der Deckscheibe in der Art zugeordnet sind, dass in einer axialen Projektion gesehen, die Anbindungspositionen der Deckscheibe jeweils in Umfangsrichtung zwischen den Laufradschaufeln liegen. Entlang der Rotationsachse des Gebläserads gesehen liegen die Deckscheibe und die Laufradschaufeln axial aneinander an. Die Laufradschaufeln können geradlinig oder in Umfangsrichtung vorwärts- bzw. rückwärtsgekrümmt verlaufen. Die Anbindungspositionen werden vorzugsweise jedoch derart festgelegt, dass diese nicht auf, sondern beabstandet zu einer Verbindungslinie zwischen der Deckscheibe und den Laufradschaufeln verläuft.

Bei dem Verfahren ist zudem in einer Ausführung vorgesehen, dass bei einer geraden Anzahl der Laufradschaufeln die Anzahl der Verschlussdüsen der Anzahl der Laufradschaufeln entspricht. Beispielsweise werden bei sechs in Umfangsrichtung an dem Gebläserad angeordneten Laufradschaufeln auch sechs Verschlussdüsen in jeweils gleichen Abstand in Umfangsrichtung vorgesehen. Somit kann sichergestellt werden, dass die Verschlussdüsen über ihre unterschiedlichen Öffnungszeiten alle Bindenähte eliminiert.

Das Verfahren ist ferner dadurch gekennzeichnet, dass bei einer ungeraden Anzahl der Laufradschaufeln die Anzahl der Verschlussdüsen höher ist als die Anzahl der Laufradschaufeln. Insbesondere sieht ein günstiges Ausführungsbeispiel vor, dass bei einer ungeraden Anzahl der Laufradschaufeln die Anzahl der Verschlussdüsen doppelt so groß ist wie die Anzahl der Laufradschaufeln. Beispielsweise werden bei fünf in Umfangsrichtung an dem Gebläserad angeordneten Laufradschaufeln zehn Verschlussdüsen in jeweils gleichen Abstand in Umfangsrichtung vorgesehen. Somit wird ein vollständiges Durchströmen bei zeitlich versetztem Öffnen der Verschlussdüsen und mithin die Beseitigung aller Bindenähte ermöglicht.

Eine Weiterbildung des Verfahrens ist dadurch gekennzeichnet, dass jeweils mehrere der Verschlussdüsen jeweils in Kaskadengruppen aufgeteilt sind und die Kaskadengruppen aufeinander nachfolgende Öffnungszeiten der Verschlussdüsen aufweisen. Durch die Zuordnung in Kaskadengruppen können die Öffnungszeiten der Verschlussdüsen gruppenweise über eine Steuerung gesteuert erfolgen. Das bedeutet, dass beispielsweise bei einem Gebläserad mit sechs Laufradschaufeln zunächst gleichzeitig drei von sechs Verschlussdüsen und anschließend die anderen drei Verschlussdüsen nach einem festgelegten zeitlichen Versatz öffnen, um Kunststoff in die Schmelzfront des Kunststoffs aus den zuerst geöffneten Verschlussdüsen zu injizieren und die Bindenähte zu beseitigen.

Insbesondere ist ein Ausführungsbeispiel vorteilhaft, das dadurch gekennzeichnet ist, dass die Verschlussdüsen einer der Kaskadengruppen genau dort positioniert sind, wo Bindenähte des aus den Verschlussdüsen einer anderen Kaskadengruppe zugeführten Kunststoffs liegen. Die Anordnung der Kaskadengruppe der Verschlussdüsen erfolgt mithin auf das entsprechende Gebläserad und die jeweilige Laufradschaufelzahl genau abgestimmt.

Das Verfahren betrifft erfindungsgemäß ein Radialgebläserad. Als Kunststoff wird vorzugsweise ein faserverstärkter Kunststoff verwendet.

Zudem umfasst die Erfindung ein Gebläserad hergestellt nach dem vorstehend beschriebenen Verfahren mit einer optionalen Bodenscheibe, Laufradschaufeln und der Deckscheibe.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1 ein Gebläserad in einer ersten Ausführungsvariante in einer perspektivischen Ansicht;
Fig. 2 ein Gebläserad in einer zweiten Ausführungsvariante in einer perspektivischen Ansicht.

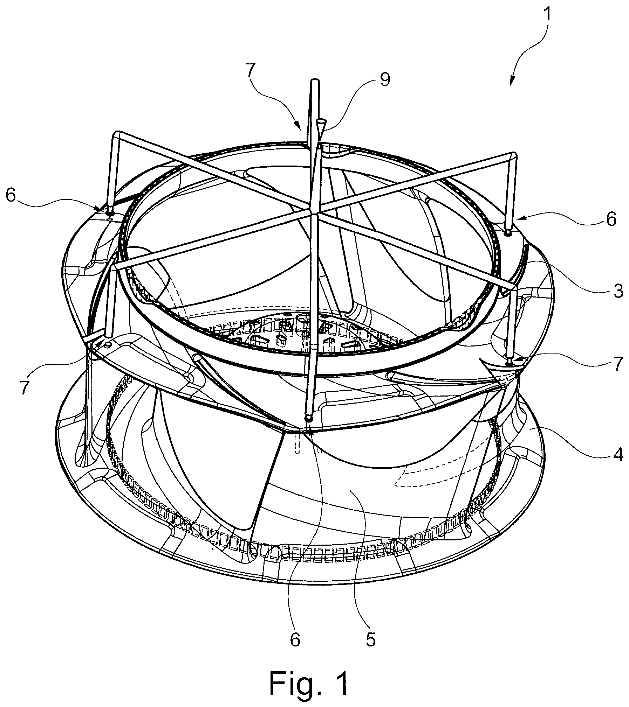

Figur 1 zeigt ein Gebläserad 1 in einer ersten Ausführungsvariante mit einer Bodenscheibe 4, einer Deckscheibe 3 und axial dazwischen ausgebildeten Laufradschaufeln 5 in einer perspektivischen Ansicht. Dieses Ausführungsbeispiel betrifft ein Gebläserad 1 ausgeführt als Radialgebläse mit sechs Laufradschaufeln 5. Auch wenn in Figur 1 eine Bodenscheibe 4 dargestellt ist, können auch Gebläseräder ohne Bodenscheibe hergestellt werden.

Das Gebläserad 1 ist mit dem beschriebenen Verfahren im Spritzgusswerkzeug im Kaskaden-Spritzgussverfahren aus thermoplastischem Kunststoff hergestellt. Für das Gebläserad 1 mit sechs Laufradschaufeln 5 sind sechs Nadelverschlussdüsen 6, 7 als Anbindungspositionen zur Zuführung des Kunststoffs vorzugsweise über ein Heißkanalsystem und die Zuführung 9 an in Umfangsrichtung gleich beabstandeten Anbindungspositionen vorgesehen, über welche der Kunststoff in die Kavität des Spritzgusswerkzeugs injiziert wird.

Die Anbindungspositionen der Nadelverschlussdüsen 6, 7 sind der Deckscheibe 3 zugeordnet, das heißt die Zuführung des flüssigen Kunststoffs erfolgt in dem Bereich, der die Deckscheibe 3 bildet. Dabei liegen die Anbindungspositionen der Nadelverschlussdüsen 6, 7 in Umfangrichtung gesehen zwischen den Laufradschaufeln 5, das heißt in einer axialen Projektion gesehen benachbart zu und nicht auf den Verbindungslinien der Laufradschaufeln 5 und der Deckscheibe 3. Der flüssige Kunststoff überströmt somit beim Herstellen des Gebläserads 1 in Umfangsrichtung den Bereich der Deckscheibe 3, welcher die Verbindungslinien der Laufradschaufeln 5 und der Deckscheibe 3 darstellt.

Die Nadelverschlussdüsen 6, 7 sind in zwei Kaskadengruppen aufgeteilt, wobei die mit dem Bezugszeichen 6 versehenen Nadelverschlussdüsen 6 die erste Gruppe und die mit dem Bezugszeichen 7 versehenen Nadelverschlussdüsen 7 die zweite Gruppe bilden. Beide Kaskadengruppen der Nadelverschlussdüsen 6, 7 weisen aufeinander nachfolgende Öffnungszeiten auf, so dass die Schmelzfront an flüssigem Kunststoff aus den Nadelverschlussdüsen 6 der ersten Kaskadengruppe an den Nadelverschlussdüsen 7 der zweiten Kaskadengruppe jeweils vorbeiläuft, wenn die Nadelverschlussdüsen 7 der zweiten Kaskadengruppe geöffnet werden. Die Nadelverschlussdüsen 7 der zweiten Kaskadengruppe sind genau dort positioniert, wo Bindenähte des aus den Nadelverschlussdüsen 6 der ersten Kaskadengruppe zugeführten Kunststoffs liegen.

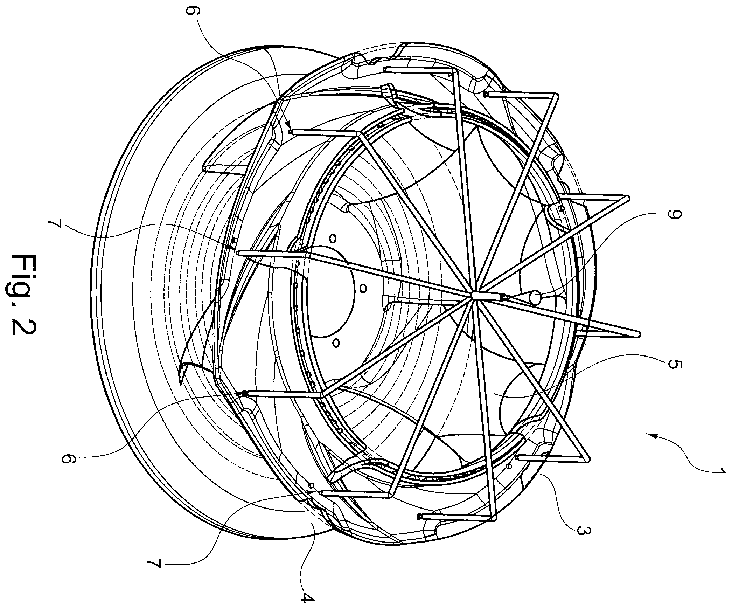

Figur 2 zeigt ein alternatives Ausführungsbeispiel eines Gebläserads 1. Die Merkmale zu der Ausführung aus Figur 1 sind im Wesentlichen identisch, jedoch variiert die Anzahl an Laufradschaufeln 5 und Anbindungspositionen mit den Nadelverschlussdüsen 6, 7. Das Gebläserad 1 umfasst nicht sechs, sondern nur fünf Laufradschaufeln 5, d.h. eine ungerade Anzahl. Um die Bindenahtbildung in gleicher Weise wie in der Ausführung gemäß Figur 1 zu eliminieren, ist die Anzahl an Anbindungspunkten und Nadelverschlussdüsen 6, 7 doppelt so groß wie die Anzahl an Laufradschaufeln 5. Auch hier wird der Kunststoff über zwei Kaskadengruppen gebildet aus den Nadelverschlussdüsen 6 und den Nadelverschlussdüsen 7 zeitlich nacheinander zwischen den Laufradschaufeln 5 im Kaskaden-Spritzguss injiziert, so dass die Bindenähte eliminiert sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können als Kunststoffe vorzugsweise faserverstärkte Thermoplaste eingesetzt werden.

## Patentansprüche

1. Verfahren zur Herstellung eines Gebläserads (1) mit einer Anzahl an Laufradschaufeln (5) und einer die Laufradschaufeln (5) überdeckenden Deckscheibe (3), wobei das Gebläserad (1) in einem Spritzgusswerkzeug im Kaskaden-Spritzgussverfahren aus Kunststoff gespritzt wird und das Spritzgusswerkzeug eine Anzahl an Verschlussdüsen (6, 7) zur Zuführung des Kunststoffs an verschiedenen Anbindungspositionen aufweist, die unterschiedliche Öffnungszeiten aufweisen, wobei die Anzahl der Verschlussdüsen (6, 7) in Abhängigkeit von der Anzahl der Laufradschaufeln (5) festgelegt ist, wobei das Gebläserad (1) ein Radialgebläserad ist.

2. Verfahren nach Anspruch 1, **dadurch gekennzeichnet, dass** die verschiedenen Anbindungspositionen der Deckscheibe (3) zugeordnet sind.

3. Verfahren nach Anspruch 2, **dadurch gekennzeichnet, dass** die verschiedenen Anbindungspositionen der Deckscheibe (3) in der Art zugeordnet sind, dass in einer Projektion gesehen, die Anbindungspositionen der Deckscheibe (3) jeweils zwischen den Laufradschaufeln (5) liegen.

4. Verfahren nach einem der vorigen Ansprüche, **dadurch gekennzeichnet, dass** bei einer geraden Anzahl der Laufradschaufeln (5) die Anzahl der Verschlussdüsen (6, 7) der Anzahl der Laufradschaufeln (5) entspricht.

5. Verfahren nach einem der vorigen Ansprüche, **dadurch gekennzeichnet, dass** bei einer ungeraden Anzahl der Laufradschaufeln (5) die Anzahl der Verschlussdüsen (6, 7) höher ist als die Anzahl der Laufradschaufeln (5).

6. Verfahren nach einem der vorigen Ansprüche, **dadurch gekennzeichnet, dass** bei einer ungeraden Anzahl der Laufradschaufeln (5) die Anzahl der Verschlussdüsen (6, 7) doppelt so groß ist wie die Anzahl der Laufradschaufeln (5).

7. Verfahren nach einem der vorigen Ansprüche, **dadurch gekennzeichnet, dass** jeweils mehrere der Verschlussdüsen (6, 7) jeweils in Kaskadengruppen aufgeteilt sind und die Kaskadengruppen aufeinander nachfolgende Öffnungszeiten der Verschlussdüsen (6, 7) aufweisen.

8. Verfahren nach dem vorigen Anspruch, **dadurch gekennzeichnet, dass** die Verschlussdüsen (6, 7) einer der Kaskadengruppen dort positioniert sind, wo Bindenähte des aus den Verschlussdüsen (6, 7) einer anderen Kaskadengruppe zugeführten Kunststoffs liegen.

9. Verfahren nach einem der vorigen Ansprüche, **dadurch gekennzeichnet, dass** der Kunststoff ein faserverstärkter Kunststoff ist.

## Claims

1. A method for manufacturing a blower wheel (1) having a plurality of impeller blades (5) and a cover plate (3) covering the impeller blades (5), wherein the blower wheel (1) is injection molded from plastic in an injection mold using a cascade injection molding process, and the injection mold comprises a plurality of shut-off nozzles (6, 7) for introducing the plastic at different gating positions, which have different opening times, wherein the number of the shut-off nozzles (6, 7) is determined based on the number of the impeller blades (5), and wherein the blower wheel (1) is a radial blower wheel.

2. The method according to claim 1, **characterized in that** the various gating positions are assigned to the cover plate (3).

3. The method according to claim 2, **characterized in that** the different gating positions are assigned to the cover plate (3) such that, viewed in a projection, the gating positions of the cover plate (3) lie between the impeller blades (5).

4. The method according to any one of the preceding claims, **characterized in that**, for an even number of the impeller blades (5), the number of the shut-off nozzles (6, 7) corresponds to the number of the impeller blades (5).

5. The method according to any one of the preceding claims, **characterized in that**, for an odd number of the impeller blades (5), the number of the shut-off nozzles (6, 7) is greater than the number of the impeller blades (5).

6. The method according to any one of the preceding claims, **characterized in that**, for an odd number of the impeller blades (5), the number of the shut-off nozzles (6, 7) is twice the number of the impeller blades (5).

7. The method according to any one of the preceding claims, **characterized in that** several of the shut-off nozzles (6, 7) are each divided into cascade groups, and the cascade groups have sequential opening times for the shut-off nozzles (6, 7).

8. The method according to the preceding claim, **characterized in that** the shut-off nozzles (6, 7) of one of the cascade groups are positioned exactly where weld lines of the plastic supplied from the shut-off nozzles (6, 7) of another cascade group are located.

9. The method according to any one of the preceding claims, **characterized in that** the plastic is a fiber-reinforced plastic.

## Revendications

1. Procédé de fabrication d'une roue de ventilateur (1) comportant un certain nombre de pales de ventilateur (5) et une plaque de recouvrement (3) recouvrant les pales de ventilateur (5), la roue de ventilateur (1) étant moulée par injection à partir de matière plastique dans un outil de moulage par injection en utilisant le procédé de moulage par injection en cascade et l'outil de moulage par injection comportant un certain nombre de buses de fermeture (6, 7) pour l'alimentation en matière plastique à différentes positions de raccordement, qui ont des temps d'ouverture différents, le nombre de buses de fermeture (6, 7) étant déterminé en fonction du nombre de pales de ventilateur (5), la roue de ventilateur (1) étant une roue de ventilateur radiale.

2. Procédé selon la revendication 1, **caractérisé en ce que** les différentes positions de raccordement sont attribuées à la plaque de recouvrement (3).

3. Procédé selon la revendication 2, **caractérisé en ce que** les différentes positions de raccordement de la plaque de recouvrement (3) sont attribuées de telle manière que, vues en projection, les positions de raccordement de la plaque de recouvrement (3) se trouvent chacune entre les pales de roue (5).

4. Procédé selon l'une quelconque des revendications précédentes, **caractérisé en ce que**, pour un nombre pair de pales (5), le nombre de buses de fermeture (6, 7) correspond au nombre de pales (5).

5. Procédé selon l'une quelconque des revendications précédentes, **caractérisé en ce que**, pour un nombre impair de pales (5), le nombre de buses de fermeture (6, 7) est supérieur au nombre de pales (5).

6. Procédé selon l'une quelconque des revendications précédentes, **caractérisé en ce que**, pour un nombre impair de pales (5), le nombre de buses de fermeture (6, 7) est deux fois supérieur au nombre de pales (5).

7. Procédé selon l'une quelconque des revendications précédentes, **caractérisé en ce qu'**une pluralité de buses de fermeture (6, 7) sont chacune divisées en groupes en cascade et les groupes en cascade présentent des temps d'ouverture successifs des buses de fermeture (6, 7).

8. Procédé selon la revendication précédente, **caractérisé en ce que** les buses de fermeture (6, 7) d'un des groupes en cascade sont positionnées là où se trouvent des lignes de soudure du plastique alimenté par les buses de fermeture (6, 7) d'un autre groupe en cascade.

9. Procédé selon l'une quelconque des revendications précédentes, **caractérisé en ce que** la matière plastique est une matière plastique renforcée par des fibres.
